# EUROPÄISCHE PATENTANMELDUNG

(11) **EP 4 209 800 A1**
(43) Veröffentlichungstag der Anmeldung: **12.07.2023**
(21) Anmeldenummer: 22213929.7
(22) Anmeldetag: 15.12.2022
(51) Int. Cl.: G01S 7/40, G01S 13/42, G01S 13/89, G01S 13/91, G01S 17/42, G01S 17/89, G01S 7/497

(54) **VERFAHREN ZUR ÜBERPRÜFUNG EINER STATISCHEN ÜBERWACHUNGSANLAGE**

(30) Priorität: 05.01.2022 DE 102022200075
(71) Anmelder: Continental Automotive Technologies GmbH, 30165 Hannover (DE)
(72) Erfinder: Goldhammer, Michael, 60488 Frankfurt am Main (DE); Quittenbaum, Peter, 60488 Frankfurt am Main (DE); Sauermann, Alexander, 60488 Frankfurt am Main (DE)
(74) Vertreter: Continental Corporation

(57) **Zusammenfassung**

Die Erfindung betrifft ein Verfahren zur Überprüfung einer in einem Verkehrsraum (12) installierten statischen Überwachungsanlage (10) mit einem Signalsender (14) zum Aussenden eines Signals (18) und einem Signalempfänger (16), der das von einem Objekt (20, 30) reflektierte Signal (18) des Signalsenders (14) empfangen kann, und mit Auswerteschaltung (24), die aus dem empfangenen Signal (18) ein Bild der Umgebung erstellen kann, wobei in der Auswerteschaltung (18) zumindest ein Referenzwert eines Referenzbild (32) der Umgebung gespeichert ist, wobei der zumindest eine Referenzwert (32) aus den reflektierten Signalen (18) zumindest eines Referenzpunkt für ein reflektiertes Signal gebildet ist, mit folgenden Schritten:
- Erstellen eines Vergleichsbildes (36) aus den reflektierten Signalen,
- Bilden eines Vergleichswertes des Vergleichsbildes aus den reflektierten Signalen des Vergleichsbildes (36),
- Vergleichen des Vergleichswertes des Vergleichsbildes (36) und des Referenzwertes des Referenzbildes (32) und Bestimmen des Wertes einer Abweichung des Vergleichswertes des und des Referenzwertes,
- Vergleich des Wertes der Abweichung mit einem Schwellwert der Abweichung und Ausgabe eines Blockadesignals, wenn der Wert der Abweichung den Schwellwert überschreitet.

Die Erfindung betrifft des Weiteren eine statische Überwachungsanlage (10), die mit einem solchen Verfahren überprüft werden kann.

## Beschreibung

Die Erfindung betrifft ein Verfahren zur Überprüfung einer statischen Überwachungsanlage mit einem Signalsender zum Aussenden eines Signals und einem Signalempfänger, der das von einem Gegenstand reflektierte Signal des Signalsenders empfangen kann, und mit Auswerteschaltung, die aus dem empfangenen Signal ein Bild der Umgebung erstellen kann.

Statische Überwachungsanlagen werden verwendet, um Verkehrsbereiche bzw. den Verkehr auf den Verkehrsbereichen zu überwachen. Die Ergebnisse der Überwachung können beispielsweise zur Steuerung der Verkehrsströme oder einzelner Fahrzeuge verwendet werden.

Zur Überwachung werden beispielsweise Systeme bestehend aus einem Signalsender und einem Signalempfänger verwendet. Das von dem Signalsender ausgesendete Signal wird von Objekten reflektiert und kann vom Signalempfänger empfangen werden. Aus der Art und der Richtung der Reflektion und der Signalstärke des reflektierten Signals kann die Position von Objekten bestimmt uns somit ein Bild der Umgebung erstellt werden.

Die Erkennung beweglicher Objekte erfolgt beispielsweise, indem Veränderungen in den aus den reflektierten Signalen erstellten Bildern der Umgebung oder Änderungen des Signals (Laufzeit, Frequenz etc.) detektiert werden.

Der zu überwachende Bereich kann aber durch stehende Objekte ganz oder teilweise blockiert sein. Da sich diese Objekte nicht bewegen, ist deren Erkennung mit den zur Erkennung beweglicher Objekte vorgesehenen Verfahren oft schwierig.

Zudem können in der Luft befindliche Stoffe oder Eintrübungen auf oder vor den Sensoren zu Einschränkungen oder Blockaden der Überwachungsanlage führen.

Aufgabe der Erfindung ist es, ein Verfahren zur Überprüfung einer statischen Überwachungsanlage bereitzustellen, das eine verbesserte Erkennung von statischen Hindernissen im Überwachungsfeld der Überwachungsanlage aufweist.

Zur Lösung der Aufgabe ist ein Verfahren zur Überprüfung einer statischen Überwachungsanlage vorgesehen, mit einem Signalsender zum Aussenden eines Signals und einem Signalempfänger, der das von einem Gegenstand reflektierte Signal des Signalsenders empfangen kann, und mit Auswerteschaltung, die aus dem empfangenen Signal ein Bild der Umgebung erstellen kann, wobei in der Auswerteschaltung zumindest ein Referenzwert eines Referenzbild der Umgebung gespeichert ist, wobei der zumindest eine Referenzwert aus den reflektierten Signalen zumindest eines Referenzpunkt für ein reflektiertes Signal gebildet ist. Das Verfahren weist die folgenden Schritte auf:
- Erstellen eines Vergleichsbildes aus den reflektierten Signalen,
- Bilden eines Vergleichswertes des Vergleichsbildes aus den reflektierten Signalen des Vergleichsbildes,
- Vergleichen des Vergleichswertes des Vergleichsbildes und des Referenzwertes des Referenzbildes und Bestimmen des Wertes einer Abweichung des Vergleichswertes des und des Referenzwertes,
- Vergleich des Wertes der Abweichung mit einem Schwellwert der Abweichung und Ausgabe eines Blockadesignals, wenn der Wert der Abweichung den Schwellwert überschreitet.

Jede Reflexion im Referenzbild erzeugt einen Referenzpunkt. Aus der Position der Referenzpunkte sowie zusätzlichen Informationen, wie der Richtung, der Signallaufzeit oder der Signalstärke kann die Auswerteschaltung ein Bild des Überwachungsraums erstellen. Sich bewegende Objekte können beispielsweise durch sich bewegende Referenzpunkte oder die Charakteristik des reflektierten Signals erkannt werden.

Aus den Reflexionen des Referenzbildes wird zumindest ein Referenzwert gebildet und abgespeichert. Dieser Referenzwert charakterisiert somit den Verkehrsraum ohne statische Hindernisse, die den Erfassungsbereich der Überwachungsanlage einschränken.

Im laufenden Betrieb der Überwachungsanlage wird aus den Reflexionen ein Vergleichsbild erstellt, das den aktuellen Status des Verkehrsraums abbildet. Sich bewegende Objekte können beispielsweise durch Veränderungen von Reflexionen oder die Art der Reflexionen erfasst werden. Des Weiteren wird aus den Reflexionen des Vergleichsbildes ein Vergleichswert gebildet, wobei der Vergleichswert mit dem gleichen Verfahren ermittelt wird, wie der Referenzwert.

Befindet sich im laufenden Betrieb der Überwachungsanlage ein statisches Hindernis im Erfassungsbereich der Überwachungsanlage deckt dieses einzelne statische Objekte dauerhaft ganz oder teilweise ab. Die Signale können somit nicht das statische Objekte und/oder den Signalempfänger erreichen. Zudem können Signale vom Hindernis reflektiert werden, wobei die Reflexionen des Hindernisses eine andere Charakteristik aufweisen als die Reflexionen der abgedeckten statischen Objekte.

Wird aus den Reflexionen des Vergleichsbildes ein Vergleichswert erstellt, weicht dieser vom Referenzwert ab, da nicht alle Reflexionen, die für den Referenzwert berücksichtigt wurden, vorhanden sind bzw. zusätzliche Reflexionen vorhanden sind. Liegt eine solche Abweichung zwischen dem Vergleichswert und dem Referenzwert vor, und es werden keine beweglichen Objekte detektiert, die diese Reflexionen hervorrufen bzw. die Objekte abdecken, kann von einem statischen Hindernis ausgegangen werden, dass die Überwachungsbereich ganz oder teilweise abdeckt.

Um Beeinflussungen durch kurzzeitige Hindernisse oder sich bewegende Objekte zu reduzieren, wird zumindest ein Schwellwert definiert. Erst wenn die Abweichung des Vergleichswertes vom Referenzwert diesen Schwellwert überschreitet, wird von einem stehenden Sichthindernis und/oder oder einer Blockade im Erfassungsbereich der Überwachungsanlage ausgegangen.

Wird ein solches Sichthindernis oder eine Blockade detektiert, wird anschließend ein Signal ausgegeben, um auf diese reagieren zu können, beispielsweise indem die Überwachungsanlage überprüft wird und gegebenenfalls vorhandene Sichthindernisse beseitigt werden.

Um Beeinflussung von kurzzeitig auftretenden Sichthindernis, beispielsweise einem haltenden Fahrzeug, zu reduzieren, wird das Vergleichsbild und/oder der Vergleichswert geglättet, insbesondere zeitlich geglättet. Für den zumindest einen Vergleichswert wird also jeweils ein Wert über einen längeren Zeitraum ermittelt. Ein kurzzeitig vorhandenes Hindernis hat somit nur einen geringeren Einfluss auf den Vergleichswert. Der Schwellwert wird hierbei vorzugsweise so gewählt, dass der Einfluss eines Sichthindernis bis zu einer definierten Zeit zu einem Vergleichswert führt, dessen Abweichung zum Referenzwert unterhalb des Schwellwertes liegt.

Das Glätten des Referenzwertes kann beispielsweise auch mit einem Tiefpassfilter erfolgen.

Beispielsweise können auch mehrere Vergleichsbilder zeitlich versetzt aufgenommen und für jedes Vergleichsbild zumindest ein Vergleichswert gebildet werden. Die Vergleichswerte können jeweils mit dem Referenzwert verglichen werden und ein Wert der Abweichung des Vergleichswertes und des Referenzwertes bestimmt werden. Die Vergleichswerte und/oder die Werte der Abweichungen können zusätzlich untereinander verglichen werden. Nehmen die Werte der Abweichung beispielsweise zu, kann dies darauf hindeuten, dass eine Blockade zunimmt bzw. einen größeren Teil des Überwachungsbereichs einnimmt. Ein abnehmender Wert der Abweichung kann dagegen darauf hinweisen, dass sich die Blockade auflöst bzw. es sich nicht um eine dauerhafte Blockade handelt.

Die Veränderung der Vergleichswerte und/oder Veränderungen des Wertes der Abweichung kann zusätzlich verwendet werden, um den Zeitpunkt der Auslösung des Blockadesignals zu beeinflussen. Beispielsweise kann bei einem abnehmenden Wert der Abweichung davon ausgegangen werden, dass sich die Blockade auflöst oder nicht dauerhaft vorhanden ist. In diesem Fall kann beispielsweise des Blockadesignal blockiert oder zeitlich verzögert werden, um weitere Vergleichswerte abzuwarten.

Durch den Vergleich der Vergleichswerte und/oder der Werte der Abweichungen untereinander können zudem beispielsweise auch Sichtblockaden erfasst werden, die sich langsam aufbauen, beispielsweise Eintrübungen auf einer Scheibe oder einer Linse infolge von Verschmutzung bei optischen Systemen oder Verschmutzungen auf einer Abdeckung bei akustischen oder elektromagnetischen Systemen.

Der oder die Schwellwerte sind beispielsweise vorab definiert und/oder durch feste Werte vorgegeben. Beispielsweise sind die vorab definierten Schwellwertdurchschnittswerte, die in Versuchen oder bei anderen Überwachungsanlagen ermittelt wurden und die eine Unterscheidung zwischen sich bewegenden Hindernissen und statischen Hindernissen ermöglichen.

Alternativ oder ergänzend können die Schwellwerte auch während des Betriebs der Überwachungsanlage angepasst werden, insbesondere in Abhängigkeit von den Werten der Abweichung und/oder den Veränderungen der Vergleichswerte. Dadurch kann die Genauigkeit der Überwachung verbessert werden, um Blockaden zuverlässige feststellen zu können. Beispielsweise kann der Schwellwert erhöht werden, wenn sich herausstellt, dass es häufig zu kurzzeitigen Blockaden kommt, die zu einer Auslösung des Blockadesignals führen könnten. Liegen die Werte der Abweichungen stets deutlich unter dem Schwellwert, kann der Schwellwert verringert werden, um Blockaden schneller zu erkennen.

Das Referenzbild ist beispielsweise fest vorgegeben und wird vorab aufgenommen.

Optional kann das Referenzbild auch angepasst werden, insbesondere in Abhängigkeit von den erfassten Vergleichsbildern. Dadurch können beispielsweise Veränderungen der statischen Elemente im Überwachungsbereich berücksichtigt werden, wodurch die Genauigkeit der Überwachung verbessert werden kann.

Beispielsweise kann in regelmäßigen Abständen ein neues Referenzbild erfasst werden, beispielsweise wenn detektiert wird, dass sich keine bewegenden Objekte und keine Blockaden im Überwachungsraum befinden.

Das Referenzbild kann in verschiedene Bereiche unterteilt werden, wobei für jeden Bereich zumindest ein Referenzwert gebildet wird, und wobei das Blockadesignal eine Information über die Bereiche enthält, in welchen der Wert der Abweichung eines Vergleichspunktes vom Referenzpunkt den Schwellwert überschreitet. Bei einer teilweisen Blockade des Überwachungsbereichs der Überwachungsanlage kann somit detektiert werden, wo sich das Sichthindernis befindet.

Beispielsweise können auch für verschiedene Bereiche verschiedene Schwellwerte angegeben werden. Beispielsweise können in einzelnen Bereichen, deren Überwachung besonders wichtig ist, niedrigere Schwellwerte angesetzt werden, sodass schon bei geringeren zeitlichen Sichtblockaden ein Blockadesignal ausgegeben wird.

Der Referenzwert und der Vergleichswert können auf verschiedene Weise aus den Reflexionen der Signale gebildet werden. Beispielsweise können der Referenzwert und der Vergleichswert aus der Anzahl empfangenen Signale des Signalempfängers gebildet werden.

Beispielsweise wird bei der Bildung des Referenzwertes und des Vergleichswertes auch die Signalstärke bzw. die Signalcharakteristik der einzelnen Reflexionen berücksichtigt. Beispielsweise wird für einzelne Reflexionen ein Radarquerschnitt bzw. eine effektive Rückstrahlfläche (RCS - Radar Cross Section) erfasst, aus welchen der Referenzwert bzw. der Vergleichswert gebildet wird.

Optional können aus den Radarquerschnitten der Reflexionen auch ein gemeinsamer Referenzwert bzw. ein gemeinsamer Vergleichswert gebildet werden, beispielsweise ein Gesamtwert oder ein Mittelwert der Radarquerschnitte.

Weitere Vorteile und Merkmale ergeben sich aus der nachfolgenden Beschreibung in Verbindung mit den beigefügten Zeichnungen. In diesen zeigen:
- Figur 1: eine schematische Darstellung einer Überwachungsanlage;
- Figur 2: eine schematische Darstellung eines aufgenommenen Bildes der Überwachungsanlage aus Figur 1 ;
- Figur 3: eine schematische Darstellung eines Referenzbildes der Überwachungsanlage aus Figur 1 ;
- Figur 4: eine schematische Darstellung eines Vergleichsbildes der Überwachungsanlage aus Figur 1 mit Hindernis;
- Figur 5: eine schematische Darstellung eines Vergleichsbildes der Überwachungsanlage aus Figur 1 mit Eintrübungen; und
- Figur 6: eine zweite schematische Darstellung eines Referenzbildes.

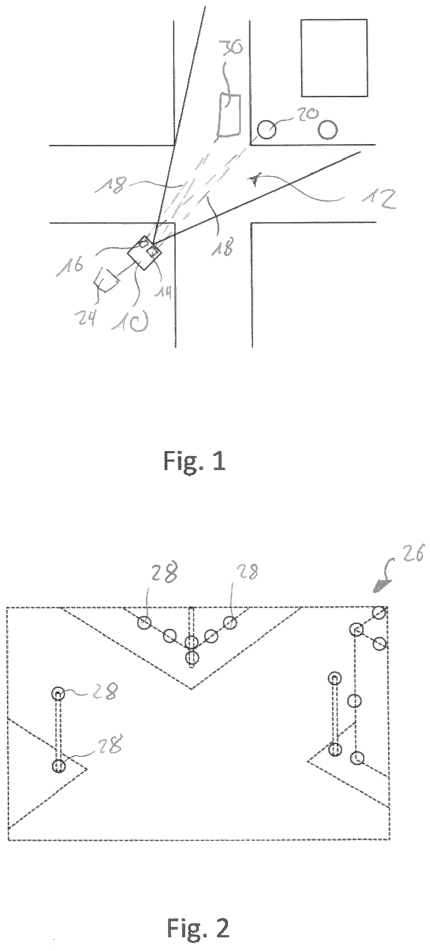

In Figur 1 ist eine statische Überwachungsanlage 10 für einen Verkehrsraum 12, in diesem Beispiel eine Kreuzung, gezeigt.

In Figur 1 ist lediglich eine Überwachungsanlage 10 gezeigt. Der Verkehrsraum 12 kann aber auch mehrere Überwachungsanlagen 10 aufweisen, beispielswiese, um den Verkehrsraum 12 aus verschiedenen Richtungen und/oder Perspektiven überwachen zu können. Die Überwachungsanlagen 10 können miteinander verbunden sein oder an eine gemeinsame Steuerung angeschlossen sein, um beispielsweise die Daten der Überwachungsanlagen 10 abzugleichen und/oder ein dreidimensionales Bild des Verkehrsraums 12 zu erstellen.

Die Überwachungsanlage weist einen Signalsender 14 und einen Signalempfänger 16 auf. Der Signalsender 14 sendet ein Signal 18 aus, das von einem Objekt 20 reflektiert wird. Das Signal 18 ist beispielsweise ein optisches, akustisches oder elektromagnetisches Signal. Beispielsweise ist das Signal ein RADAR (radio detection and ranging) - oder LIDAR (light detection and ranging)-Signal.

Trifft das Signal 18 auf ein Objekt 20, wird das Signal 18 reflektiert. Das reflektierte Signal 18 wird von dem Signalempfänger 16 erfasst. Aus der Laufzeit des Signals 18 vom Signalsender 14 bis zum Signalempfänger 16 kann die Entfernung des Objekts 20 bestimmt werden. Aus der Richtung, in der das Signal 18 ausgesendet wird und der Richtung, aus der das Signal 18 vom Signalempfänger 16 empfangen wird, kann zudem die Richtung des Objekts 20 bestimmt werden.

Aus den empfangenen Signalen 22 bzw. der Richtung sowie der Entfernung der Objekte 20 kann in einer Auswerteschaltung 24 ein Bild 26 des Verkehrsraums 12 erstellt werden. Jede Reflexion kann hierbei in diesem Bild 26 vereinfacht durch einen Punkt 28 dargestellt werden (siehe Figur 2).

Das Bild 26 wird ständig aktualisiert, um Veränderungen im Verkehrsraum 12, beispielsweise sich bewegende Objekte 30 wie Fahrzeuge, zu erkennen. Beispielsweise wird der Signalsender 14 so verschwenkt bzw. bewegt, dass dieser den gesamten zu überwachenden Bereich regelmäßig bzw. mit einer vorgegebenen Frequenz erfasst.

Befindet sich ein sich bewegendes Objekt 30 im Verkehrsraum 12, kann dieses dadurch erkannt werden, dass sich die Reflexionen, also die Punkte 28 dieses Objekts im Bild 26 verändern, beispielsweise ihre Position ändern oder die Laufzeit und/oder die Frequenz des Signals 22 zu- oder abnimmt.

Statische Objekte, beispielsweise Häuser oder Verkehrszeichen stellen dagegen eine stets gleiche Reflexion des Signals 22 bereit, sodass die Punkte 28, die diese statischen Objekte im Bild 26 darstellen, stets unverändert bleiben.

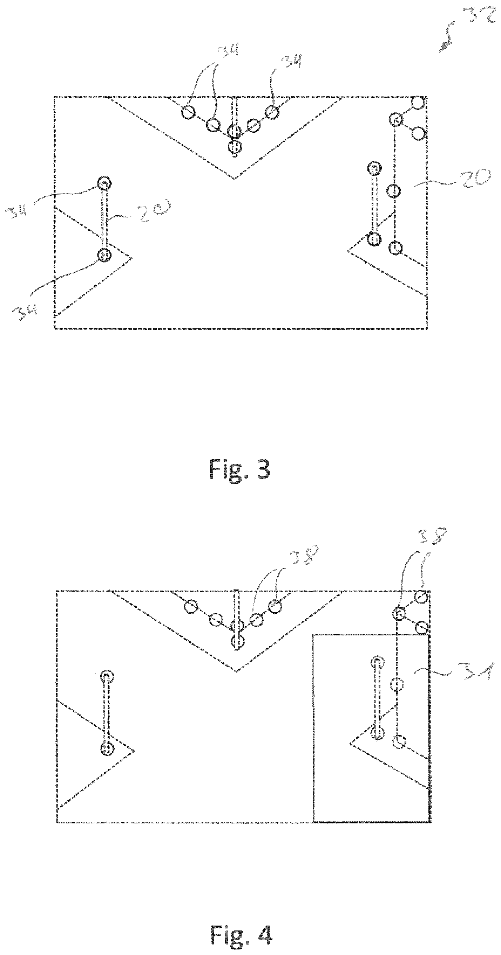

Während des Betriebs einer solchen statischen Überwachungsanlage 10 kann es zu vollständigen oder teilweisen Blockaden des zu überwachenden Bereichs kommen, beispielsweise durch stehende Objekte 31 (siehe Figur 4), die Bereiche des zu überwachenden Verkehrsraums 12 abdecken. Darüber hinaus kann es auch zu Verschmutzungen oder Eintrübungen unmittelbar vor dem Signalsender 14 und/oder dem Signalempfänger 16 oder im Signalweg kommen, die das Signal ganz oder teilweise blockieren. Beispielsweise kann es durch Rauch, dichten Nebel oder Niederschlag zu einer teilweisen oder vollständigen Absorption des Signals 18 kommen.

Solche Blockaden, Verschmutzungen oder Eintrübungen können die Funktion der Überwachungsanlage 10 einschränken, da der Verkehrsraum nicht mehr überwacht werden kann. Aus diesem Grund ist es erforderlich, solche Störungen zuverlässig und schnell zu erkennen, um diese beseitigen zu können. Des Weiteren ist es erforderlich, solche Störungen von vorübergehenden Blockaden, beispielsweise durch ein sich bewegendes Objekt, zuverlässig zu unterscheiden.

Um solche Störungen zuverlässig zu erkennen, wird vorab ein Referenzbild 32 (Figur 3) erstellt und in der Auswerteschaltung 24 gespeichert, das den Verkehrsraum 12 ohne bewegliche Objekte 30 und ohne Sichthindernisse darstellt.

Das Referenzbild 32 kann beispielsweise vorab oder bei der Installation der Überwachungsanlage 10 aufgenommen und in der Auswerteschaltung 24 gespeichert werden. Beispielsweise wird bei oder unmittelbar nach der Installation der Überwachungsanlage 10 ein Zustand hergestellt und/oder detektiert, in dem sich ausschließlich statische Objekte im zu überwachenden Verkehrsraum 12 befinden.

Das Referenzbild 32 enthält somit ausschließlich Reflektionen 34, die feststehende Objekte kennzeichnen. Aus diesen Reflektionen 34 wird zumindest ein Referenzwert erfasst und/oder gebildet.

Beispielsweise wird für einzelne Reflexionen 34 ein Radarquerschnitt bzw. eine effektive Rückstrahlfläche (RCS - Radar Cross Section) erfasst.

Optional können aus den Radarquerschnitten der Reflexionen 34 auch ein gemeinsamer Referenzwert gebildet werden, beispielsweise ein Gesamtwert oder ein Mittelwert der Radarquerschnitte. Beispielsweise kann auch die Gesamtanzahl der Reflexionen 34 und oder die Anzahl der Reflexionen innerhalb einer definierten Zeit erfasst werden.

Die so gebildeten Referenzwerte werden in der Auswerteschaltung 24 gespeichert. Des Weiteren wird für jeden Referenzwert ein Schwellwert gespeichert, um den ein Vergleichswert maximal von diesem Referenzwert abweichen darf.

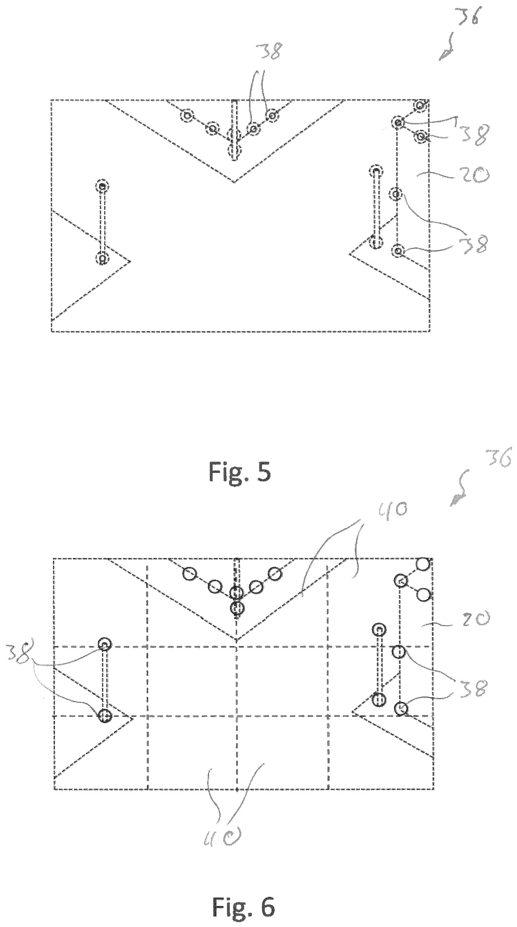

Im laufenden Betrieb der Überwachungsanlage 10 wird aus den empfangenen Signalen 22 ein Vergleichsbild 36 (Figuren 4 und 5) erstellt. Das Vergleichsbild 36 kann hierbei eine einfache Aufnahme eines Bildes 26 darstellen. Das Vergleichsbild 36 kann auch aus mehreren zeitlich hintereinander aufgenommenen mehreren Bildern 26 erstellt werden, beispielsweise, in dem das Vergleichsbild 36 über einen längeren Zeitraum geglättet und/oder gefiltert wird.

Für dieses Vergleichsbild 36 wird zumindest ein zu dem zumindest einen Referenzwert korrespondierender Vergleichswert erfasst und/oder gebildet. Der Vergleichswert wird dabei aus den Reflexionen 38 des aktuellen Bildes der Überwachungsanlage 10, also des Vergleichsbildes 36, gebildet.

Die Vergleichswerte werden mit den korrespondierenden Referenzwerten verglichen und ein Wert einer gegebenenfalls vorhandenen Abweichung zwischen dem Referenzwert und dem Vergleichswert bestimmt. Dieser Wert der Abweichung wird mit dem Schwellwert der für den jeweiligen Referenzwert gespeichert ist, verglichen. Übersteigt der Wert der Abweichung den Schwellwert, wird ein Blockadesignal ausgelöst. Das Blockadesignal kann beispielsweise von einer übergeordneten Steuerung empfangen werden. Anschließend kann beispielsweise eine Diagnose der Überwachungsanlage 10 durchgeführt werden oder die Überwachungsanlage 10 wird manuell kontrolliert, um das Sichthindernis zu verifizieren und gegebenenfalls zu entfernen.

Zusätzlich zu den Reflexionen 34 der statischen Objekte haben auch Reflexionen von kurzzeitig vorhandenen Objekten, beispielsweise Fahrzeugen 30, einen Einfluss auf den Vergleichswert. Zudem können statische Objekte zumindest teilweise für einen kurzen Zeitraum von sich bewegenden Objekten verdeckt werden.

Um diese kurzzeitigen Einflüsse zu reduzieren, wird das Vergleichsbild 36 geglättet oder gefiltert. Beispielsweise können zeitlich versetzt, insbesondere unmittelbar aufeinander folgend, mehrere Vergleichsbilder 36 aufgenommen werden und ein Mittelwert aus diesen Bildern gebildet werden.

Werden einzelne statische Objekte ganz oder teilweise verdeckt, hat dies einen dauerhaften Einfluss auf den zumindest einen Vergleichswert, der auch durch eine Glättung, Filterung und/oder Mittelwertbildung nicht oder nur geringfügig abnimmt. Der Einfluss eines sich bewegenden Objektes auf den Vergleichswert nimmt dagegen ab.

Die Schwellwerte der Referenzwerte sind in hierbei so gewählt, dass die Veränderungen der Vergleichswerte aufgrund eines vorübergehend bestehenden Sichthindernisses so gering ist, dass die Schwellwerte nicht überschritten werden und es nicht zum Auslösen des Blockadesignals kommt.

Besteht die Blockade über einen längeren Zeitraum, verändert sich die Vergleichswerte dagegen derart, dass die Schwellwerte überschritten und ein Blockadesignal ausgegeben werden.

Die Schwellwerte können fest vorgegeben werden, beispielsweise bei der Installation der Überwachungsanlage 10. Es ist auch möglich, dass mehrere Schwellwerte vorgegeben werden.

Des Weiteren kann bei mehreren Referenzwerten ein Blockadesignal nur ausgegeben werden, wenn Schwellwerte von verschiedenen Referenzwerten überschritten sind oder ein Gesamtschwellwerte, der aus den einzelnen Schwellwerte und gebildet wird, überschritten wird.

Des Weiteren können die Schwellwerte auch während des Betriebes der Überwachungsanlage 10 angepasst werden. Die Anpassung der Schwellwerte kann beispielsweise in Abhängigkeit von den Vergleichsbildern bzw. den Vergleichswerten erfolgen.

Beispielsweise kann ein Schwellwert reduziert werden, wenn sich während des Betriebes der Überwachungsanlage 10 herausstellt, dass der Vergleichswert eine bestimmte Abweichung vom Referenzwert nicht oder äußerst selten überschreitet.

Sollte es häufig zu kurzzeitigen Blockaden kommen, die zu einer Auslösung des Blockadesignals führen, kann der Schwellwert auch erhöht werden, um Fehlauslösungen des Blockadesignals zu verhindern.

Optional oder ergänzend kann auch das Referenzbild während des Betriebes der Überwachungsanlage 10 angepasst und/oder korrigiert werden, wodurch auch die Referenzwerte angepasst und oder korrigiert werden. Dadurch kann beispielsweise auf Veränderungen an statischen Objekten, die den Überwachungsbereich der Überwachungsanlage 10 nicht einschränken, reagiert werden.

Optional können das Referenzbild und das Vergleichsbild in Bereiche 40 aufgeteilt werden (Figur 6), wobei für jeden Bereich zumindest ein Referenzwert ermittelt wird und ein zu dem Referenzwert korrespondierender Vergleichswert bestimmt wird. Für jeden Referenzwert ist zumindest ein Schwellwert definiert.

Für jeden der Bereiche erfolgt ein Vergleich des zumindest einen Referenzwertes mit dem korrespondierenden Vergleichswert. Bei Überschreiten eines für diesen Bereich definierten Schwellwertes erfolgt eine Ausgabe des Blockadesignals.

Die Bereiche ermöglichen eine genauere Bestimmung der Blockade. Werden nur in einzelnen Bereichen des Vergleichsbildes die Schwellwerte überschritten, kann dies ein Zeichen für eine teilweise Blockade sein. Werden alle Schwellwerte überschritten, ist der Überwachungsbereich der Überwachungsanlage vollständig blockiert. Zudem kann über die Position des Bereiches, in dem der Schwellwert überschritten ist, eine Aussage getroffen werden, wo sich die Blockade befindet und wie schnell diese beseitigt werden muss.

Beispielsweise können für verschiedene Bereiche verschiedene Schwellwerte bzw. verschieden hohe Schwellwerte definiert sein. Ist in einem Bereich mit häufigen kurzzeitigen Blockaden zu rechnen, beispielsweise durch Fahrzeuge, kann der Schwellwert höher angesetzt werden, um Fehlauslösungen des Blockadesignals zu verhindern.

Für Bereiche des Referenzbildes bzw. des Vergleichsbild es, bei welchen kurzzeitige Blockaden, beispielsweise durch Fahrzeuge, sehr unwahrscheinlich sind, kann der Schwellwert entsprechend niedriger angesetzt werden.

Des Weiteren können die Schwellwerte während des Betriebes der Überwachungsanlage 10 angepasst werden, beispielsweise wenn sich herausstellt, dass ein Bereich des Referenzbildes bzw. des Vergleichsbildes häufig kurzzeitig blockiert ist oder Bereiche des Referenzbildes bzw. des Vergleichsbildes sehr selten blockiert wird.

Das Referenzbild 32 kann des Weiteren über die Betriebsdauer der Überwachungsanlage 10 angepasst werden, beispielsweise indem die Auswerteschaltung einen Algorithmus enthält, der die Erkennung neuer statische Objekte und/oder die Veränderung von statischen Objekten im Verkehrsraum ermöglicht.

Dadurch kann beispielsweise ein sich bewegendes Sichthindernis, das einzelne Referenzpunkte blockiert, zuverlässiger erkannt werden. Beispielsweise kann durch den Vergleich der einzelnen Vergleichsbilder 36 geprüft werden, ob einzelne Referenzpunkte 34 in allen Vergleichsbildern 36 blockiert sind oder ob einzelne Referenzpunkte 34 nach einer bestimmten Zeit wieder sichtbar sind, sodass die übrigen abgedeckten Referenzpunkte damit zu rechnen ist, dass diese wieder sichtbar sind. Insbesondere kann von der Auswerteschaltung 24 das Blockadesignal zurückgehalten werden, falls eine solche Situation erkannt wird.

Des Weiteren können durch den Vergleich der Vergleichsbilder 36 untereinander weitere statische Objekte erkannt werden, für die Referenzpunkte 34 gespeichert werden können.

Neben einer vollständigen Blockade eines oder aller Referenzpunkte 34 kann es auch zu diffusen Sichtbehinderungen kommen, beispielsweise durch starke Eintrübung der Luft oder unmittelbar vor dem Signalsender und/oder dem Signalempfänger. Beispielsweise können Stoffe in der Luft, wie Regen, Nebel oder Rauch, zu einer starken Absorption der Signale 18 führen. Auch Verschmutzungen auf oder vor dem Signalsender und/oder dem Signalempfänger können zu einer Absorption der Signale 18 führen. Das heißt, das Signal kann weiterhin ausgesendet und empfangen werden, aber aufgrund der teilweisen Signalabsorption ist die Reflexion deutlich schwächer (Figur 5).

Auch eine solche Sichtbehinderung kann mit dem vorstehend beschriebenen Verfahren detektiert werden. Beispielsweise führt die Absorption der Signale zu einer Abweichung bei aus den Radarquerschnitt der effektiven Rückstrahlfläche gebildeten Referenzwerten und Vergleichswerten.

Vorzugsweise werden verschiedene Referenzwerte und Vergleichswerte gebildet. Werden verschiedene Signalwerte und/oder Signalcharakteristika verwendet, können so Fehler minimiert und/oder genauere Informationen zu den Sichtblockaden gewonnen werden.

Beispielsweise kann eine diffuse Sichtbehinderung durch Rauch oder Nebel zu einer starken Abweichung eines aus den Radarquerschnitt oder der effektiven Rückstrahlfläche gebildeten Vergleichswertes vom korrespondierenden Referenzwert führen, währen die Abweichung eines Vergleichswertes, der auf der Anzahl der Reflexionen pro Zeiteinheit basiert, vom korrespondierenden Referenzwert geringer ausfällt, da trotz der diffusen Sichtbehinderung Reflexionen vorhanden sind.

## Patentansprüche

1. Verfahren zur Überprüfung einer in einem Verkehrsraum (12) installierten statischen Überwachungsanlage (10) mit einem Signalsender (14) zum Aussenden eines Signals (18) und einem Signalempfänger (16), der das von einem Objekt (20, 30) reflektierte Signal (18) des Signalsenders (14) empfangen kann, und mit Auswerteschaltung (24), die aus dem empfangenen Signal (18) ein Bild der Umgebung erstellen kann, wobei in der Auswerteschaltung (18) zumindest ein Referenzwert eines Referenzbild (32) der Umgebung gespeichert ist, wobei der zumindest eine Referenzwert (32) aus den reflektierten Signalen (18) zumindest eines Referenzpunkt für ein reflektiertes Signal gebildet ist, mit folgenden Schritten:
- Erstellen eines Vergleichsbildes (36) aus den reflektierten Signalen,
- Bilden eines Vergleichswertes des Vergleichsbildes aus den reflektierten Signalen des Vergleichsbildes (36),
- Vergleichen des Vergleichswertes des Vergleichsbildes (36) und des Referenzwertes des Referenzbildes (32) und Bestimmen des Wertes einer Abweichung des Vergleichswertes des und des Referenzwertes,
- Vergleich des Wertes der Abweichung mit einem Schwellwert der Abweichung und Ausgabe eines Blockadesignals, wenn der Wert der Abweichung den Schwellwert überschreitet.

2. Verfahren nach Anspruch 1, **dadurch gekennzeichnet, dass** das Vergleichsbild (36) und/oder der Vergleichswert geglättet wird, insbesondere zeitlich geglättet wird.

3. Verfahren nach Anspruch 2, **dadurch gekennzeichnet, dass** das Glätten mit einem Tiefpassfilter erfolgt.

4. Verfahren nach einem der vorhergehenden Ansprüche, **dadurch gekennzeichnet, dass** zeitlich versetzt mehrere Vergleichsbilder (36) aufgenommen und für jedes Vergleichsbild zumindest ein Vergleichswert gebildet wird.

5. Verfahren nach Anspruch 4, **dadurch gekennzeichnet, dass** bei einer Veränderung der Vergleichswerte und/oder bei einer Veränderung der Abweichung des Vergleichswertes des und des Referenzwertes das Blockadesignal blockiert und oder verzögert wird.

6. Verfahren nach einem der vorhergehenden Ansprüche, **dadurch gekennzeichnet, dass** die Schwellwerte vorab definiert werden.

7. Verfahren nach einem der vorhergehenden Ansprüche, **dadurch gekennzeichnet, dass** die Schwellwerte angepasst werden, insbesondere in Abhängigkeit von den Werten der Abweichung des Vergleichswertes des und des Referenzwertes.

8. Verfahren nach einem der vorhergehenden Ansprüche, **dadurch gekennzeichnet, dass** das Referenzbild und/oder der zumindest eine Referenzwert vorab aufgenommen wird.

9. Verfahren nach einem der vorhergehenden Ansprüche, **dadurch gekennzeichnet, dass** das Referenzbild und/oder der zumindest eine Referenzwert angepasst wird, insbesondere in Abhängigkeit von den erfassten Vergleichsbildern und/oder dem zumindest einen Vergleichswert.

10. Verfahren nach einem der vorhergehenden Ansprüche, **dadurch gekennzeichnet, dass** das Referenzbild in verschiedene Bereiche unterteilt wird, wobei für jeden Bereich zumindest ein referenzwert gebildet wird, und wobei das Blockadesignal eine Information über die Bereiche enthält, in welchen der Wert der Abweichung eines Vergleichspunktes vom Referenzpunkt den Schwellwert überschreitet.

11. Verfahren nach einem der vorhergehenden Ansprüche, **dadurch gekennzeichnet, dass** der Vergleichswert aus der Anzahl empfangenen Signale des Signalempfängers gebildet wird.

12. Verfahren nach einem der vorhergehenden Ansprüche, **dadurch gekennzeichnet, dass** die Bildung des Referenzwertes und des Vergleichswertes die Signalstärke und/oder die Signalcharakteristik der einzelnen Reflexionen berücksichtigt.

13. Statische Überwachungsanlage (10) für einen Verkehrsraum (12), mit einem Signalsender (14) zum Aussenden eines Signals (18) (16), der das von einem Objekt (20, 30) reflektierte Signal (18) des Signalsenders (14) empfangen kann, und mit einer Auswerteschaltung (24), die aus dem empfangenen Signal (18) ein Bild (26) der Umgebung erstellen kann, wobei die Auswerteschaltung (24) zur Überprüfung der statischen Überwachungsanlage (10) nach einem Verfahren der vorhergehenden Ansprüche ausgebildet ist.
